# EUROPÄISCHE PATENTSCHRIFT

(11) **EP 2 976 206 B1**
(45) Veröffentlichungstag und Bekanntmachung des Hinweises auf die Patenterteilung: **09.01.2019**
(21) Anmeldenummer: 14714197.2
(22) Anmeldetag: 20.03.2014
(51) Int. Cl.: B29C 49/22

(54) **EXTRUSIONSBLASGEFORMTE TUBE UND VERFAHREN**
EXTRUSION-BLOW-MOULDED TUBE AND METHOD
TUBE FORMÉ PAR EXTRUSION-SOUFFLAGE ET PROCÉDÉ

(30) Priorität: 20.03.2013 CH 6372013
(43) Veröffentlichungstag der Anmeldung: 27.01.2016
(73) Patentinhaber: Alpla Werke Alwin Lehner GmbH & Co. KG, 6971 Hard (AT)
(72) Erfinder: KÜNZ, Johann, 6971 Hard (AT)
(74) Vertreter: Riederer Hasler & Partner Patentanwälte AG
(86) Internationale Anmeldenummer: PCT/EP2014/055660
(87) Internationale Veröffentlichungsnummer: WO 2014/147206

(56) Entgegenhaltungen:
- EP-A1- 1 029 793
- EP-A1- 2 497 453
- EP-A2- 1 043 235
- US-A1- 2008 012 172

## Beschreibung

### Technisches Gebiet

Die Erfindung betrifft eine extrusionsblasgeformte Tube sowie ein Verfahren zu deren Herstellung.

### Stand der Technik

Die US 2002/0180114 (aus PCT/US01/45602) offenbart eine im Extrusionsblasverfahren hergestellte, einstückige Tube, an welcher ein Drehverschluss einstückig angeformt ist.

Aus der WO2009/144559 ist ein Verfahren zur Herstellung einer Phiale oder Ampulle für Einzeldosen bekannt. Das Verfahren umfasst die Extrusion einer Barriereschicht in ein schlauchförmiges Zwischenprodukt, das Aufblasen des Zwischenprodukts in einer zweiteiligen Form sowie das Abschneiden des proximalen Endes des Zwischenprodukts, um eine Befüllöffnung zu bilden, welche nach der Produktbefüllung versiegelbar ist. Die Barriereschicht kann entweder aus LDPE, HDPE, LLDPE, EVOH oder aus irgendeinem anderen bekannten Barrierematerial gebildet sein. Barriereschichten bestehen in der Regel aus nur einem Material.

Weitere extrusionsblasgeformte Behälter sind aus EP1514805A1, WO2004074115A2, WO2007071304A1 und WO2009144559A2 bekannt.

Die US 2008/0012172 offenbart einen Behälter in Gestalt einer Flasche für die Aufnahme eines feuchtigkeitsempfindlichen Produkts. Die Flasche besitzt eine aus 2 Schichten bestehende Behälterwand, die durch Co-Extrusion hergestellt ist. Die innere Schicht weist ein Trocknungsmittel auf, und die äussere Schicht besteht aus einem festen, feuchtigkeitsundurchlässigen Material. Gemäss einem Ausführungsbeispiel besteht die äussere Schicht der Flasche aus einem HDPE (high density polyethylene) und die innere Schicht aus LDPE (linear low density polyethylene) und einem Molekularsieb als Trocknungsmittel.

Die EP-A1-2 497 453 offenbart einen Kunststofffilm mit Sauerstoffabsorptionsfunktion bestehend aus mindestens 4 co-extrudierten Schichten und einen daraus hergestellten Infusionsbeutel. Die EP-A1-2 497 453 macht allerdings keine genaueren Angaben darüber, wie der Infusionsbeutel hergestellt wird.

Es ist allerdings bekannt, dass Beutel gemäss Stand der Technik hergestellt werden, indem eine Folie gefaltet und die offene Längsseite verschweisst wird. Alternativ können auch zwei Folien übereinander gelegt und die beiden Längsseiten verschweisst werden. In beiden Fällen entsteht dabei ein schlauchförmiges Gebilde, an dem die Entnahmeöffnung durch Hitzeeinwirkung angeformt wird. Die Befüllung des Beutels erfolgt danach über das noch offene, der Entnahmeöffnung gegenüberliegende Ende des Schlauches.

### Aufgabe der Erfindung

Es ist die Aufgabe der vorliegenden Erfindung, eine Tube bereitzustellen, welche preiswert und einfach in grosser Stückzahl herstellbar ist. Zudem soll es die Erfindung ermöglichen, eine Tube herzustellen, die in Bezug auf Transparenz und Rückstelleffekt optimiert ist. Weitere Vorteile und Ziele der vorliegenden Erfindung ergeben sich aus der nachfolgenden Beschreibung.

### Darstellung der Erfindung

Die oben genannte Aufgabe wird erfindungsgemäss gelöst durch eine Tube nach Anspruch 1 und ein Verfahren zu deren Herstellung nach Anspruch 18.

Allgemeiner formuliert handelt es sich dabei um eine extrusionsblasgeformte Tube, die eine LLDPE-reiche Schicht aufweist und die durchschnittliche Wandstärke der Tube im Bereich des Körpers 0.3 bis 0.85 Millimeter beträgt. Bevorzugt beträgt die Wandstärke 0.3 bis 0.65 Millimeter. Erfindungsgemässe Tuben haben zur Überraschung der Erfinder über einen grossen Temperaturbereich, der weit unter null Grad Celsius reichen kann, einen hervorragenden Rückstelleffekt, was im Zusammenhang mit der Verwendung von Tuben von elementarer Bedeutung ist. Zweckmässigerweise ist deren Körper, Schulter und Hals in einem Stück durch Extrusionsblasformen hergestellt. Bei der Tube handelt es sich vorteilhaft um eine endseitig befüllte oder befüllbare Tube.

Weitere vorteilhafte Ausgestaltungsmöglichkeiten ergeben sich aus den Gegenständen der abhängigen Patentansprüche. Ein Fachmann kann durch beliebige Kombination der Gegenstände - soweit sie sich nicht gegenseitig ausschließen - zu weiteren Gegenständen gelangen, die von der Erfindung als umfasst anzusehen sind.

Gemäss einem anderen, unabhängigen Aspekt der Erfindung hat eine extrusionsblasgeformte Tube eine LLDPE-reiche Schicht mit einem LLDPE-Anteil von 50 bis 95 Gewichts-Prozent. In einer bevorzugten Ausführungsform der Erfindung kann der Anteil von LLDPE (linear low-density polyethylene) in der LLDPE-reichen Schicht 60 bis 90 Gewichts-Prozent und besonders bevorzugt 70 bis 85 Gewichts-Prozent betragen, bezogen auf das Gesamtgewicht der LLDPE-reichen Schicht. Vorzugsweise enthält die LLDPE-reiche Schicht als weiteres Material entweder HDPE (high density polyethylen) und/oder LDPE (low density polyethylen). Diese haben allein oder zusammen einen gewichtsmässigen Anteil zwischen 5 Gew.proz. und 50 Gew.-proz., vorzugsweise zwischen 10 Gew.proz. und 40 Gew.-proz. und besonders bevorzugt zwischen 15 Gew.proz. und 30 Gew.-proz. Ferner kann die extrusionsgeblasene Tube eine Barriereschicht beispielsweise aus EVOH (Ethylene vinyl alcohol) aufweisen. Eine derartige Barriereschicht hat in der Regel 3 Gewichtsprozent bis 5 Gewichtsprozent. Es ergeben LLDPE mit oder ohne der Barriereschicht und LDPE und/oder HDPE zusammen im Wesentlichen 100 Gew.-proz.. Es hat sich gezeigt, dass durch den beschriebenen hohen LLDPE-Anteil eine Schicht erzeugt werden kann, die eine gute Transparenz besitzt, um das sich in der Tube befindliche Produkte für den Konsumenten sichtbar zu machen. Die Tube, respektive ihre Innenseite, ist geeignet, Produkte wie Nahrungsmittel, Kosmetikartikel, und Farbe, aber auch Kleb- oder Schmierstoffe aufzunehmen. Die Tube kann hierbei transluzent oder opak eingefärbt sein. Zudem ist der Rückstelleffekt, also die Eigenschaft eines Behälters, nach Verformung ohne Schädigung seine ursprüngliche Form wieder anzunehmen, bei Tuben, die ganz oder teilweise aus einer solchen LLDPE-reichen Schicht bestehen, hervorragend. Diese Eigenschaft ist im Zusammenhang mit der Verwendung von Tuben von herausragender Bedeutung. Auch ermöglicht diese LLDPE-reiche Schicht, dass der Rückstelleffekt über einen weiten Temperaturbereich bis etwa minus 25°C sichergestellt sein kann. Aufgrund der guten Temperaturbeständigkeit der mit einer LLDPE-Schicht ausgestatteten Tuben kann das in die Tube einzufüllende Produkt zur Erhöhung von dessen Fließfähigkeit mit einer Temperatur bis 60°C eingefüllt werden, ohne dass die Transparenz oder die Rückstellfähigkeit der Tube während des Alltagsgebrauchs negativ beeinflusst wären. Weiterhin hat sich gezeigt, dass die LLDPE-Schicht in einer Tube die Ausbildung sehr konturierter Strukturen mit im Wesentlichen scharfkantigen Ecken beim Extrusionsblasformen ermöglicht und damit die Herstellung feiner Oberflächenstrukturen erlaubt. Durch die Verwendung einer LLDPE-reichen Schicht in der Tube ist es möglich, eine an ihr als Erhebung ausgebildete Kontur zu erzeugen, die an allen Kanten und Ecken einen um 0.05mm bis 0.1mm größeren Radius aufweist als die in einer Kavität der Blasform ausgebildete mit der Erhebung korrespondierende Vertiefung. So ist es beispielsweise möglich, an der Tube eine Kontur zu erzeugen, deren alle Ecken und Kanten einen Radius von 0.05 mm aufweisen. Wenn die Kavität einer Blasform spanabhebend bearbeitet wird, werden aufgrund der Bearbeitungswerkzeuge in der Regel Ecken und Kanten mit Radien von 0.2 bis 0.25mm erzeugt. Damit lässt sich an der Tube eine Kontur erzeugen, deren alle Kanten und Ecken einen Radius bis etwa 0.3mm aufweisen und sich damit für den Verbraucher als scharfkantig darstellen. Somit sind unter dem Begriff "im Wesentlichen scharfkantig" Ecken und Kanten zu verstehen, die an einer dem Verbraucher zugewandten Erhebung oder Vertiefung einen Radius aufweisen, der gleich oder kleiner als 0.3mm ist. Da sich die optionale Barriereschicht in dem extrusionsgeblasenen Schlauch erstreckt, aus dem die Tube gefertigt wird, erstreckt sich die Barriereschicht in der Tube in Hals, Schulter und Körper.

Eine Oberfläche der Tube, insbesondere des Tubenkörpers, kann wenigstens eine Erhebung und/oder Vertiefung aufweisen. Diese besitzt vorteilhaft die Form eines Musters, einer Graphik und/oder eines Zeichens (z.B. Schriftzeichen, Buchstaben, Zahlen etc.). Eine derart verzierte oder markierte Tube besitzt den Vorteil einer gesteigerten Ästhetik und eines hohen Wiedererkennungswerts. Aufgrund der LLDPE-Schicht in der Tube lassen sich Oberflächenstrukturen schaffen, die sich durch filigrane Strukturen auszeichnen. Die Erhebung und /oder die Vertiefung kann sich im Wesentlichen quer zu einer Tubentrennebene erstrecken, da in der Regel die Tube in einer aus zwei Hälften bestehenden Blasform gefertigt wird. Bei einer Trennung der Hälften zur Entnahme aus der Blasform kann die vorgefertigte Tube mit ihrer Erhebung und / oder Vertiefung ohne besondere Vorkehrungen entnommen werden. Natürlich kann in der Blasform auch ein Schieber integriert sein, um eine Erhebung und / oder Vertiefung zu erzeugen die sich nicht im Wesentlichen senkrecht zur Trennebene erstreckt.

Eine Breite der wenigstens einen im Wesentlichen scharfkantig ausgebildeten Erhebung und / oder Vertiefung erstreckt sich im Wesentlichen entlang einer Mittelachse der Tube und eine Tiefe der wenigstens einen im Wesentlichen scharfkantig ausgebildeten Erhebung und / oder Vertiefung erstreckt sich im Wesentlichen quer zu der Mittelachse der Tube. Bei einer Breite von 1mm ist die erreichbare Tiefe etwa 1mm. Damit beträgt das Reckverhältnis von Tiefe zu Breite etwa eins zu eins. Bei einer Breite von mehr als 1mm stellt sich sukzessive ein Verhältnis von Tiefe zu Breite von bis zu zwei zu eins bei einer Breite von 10mm ein. Die Tiefe kann somit 20mm betragen. Bei einer Breite von weniger als 1mm stellt sich sukzessive ein Verhältnis von Tiefe zu Breite von bis zu eins zu zwei bei einer Breite von 0,4mm ein. Die Tiefe kann somit 0.2mm betragen. Zu ermittelnde Werte der jeweiligen Tiefe zwischen einer Breite von 1mm und 10mm, respektive einer Breite von 1mm und 0.4mm, können hierbei einer linearen Funktion oder auch einer nicht-linearen Funktion unterliegen.

Nach einer weiteren Ausgestaltungsvariante enthält die LLDPE-reiche Schicht zusätzlich HDPE (high-density polyethylene). Ein bevorzugter HDPE-Anteil beträgt bis 5, 10 , 15 oder bis hin zu 50 Gewichts-Prozent, bezogen auf das Gesamtgewicht der LLDPE-reichen Schicht. Es hat sich gezeigt, dass ein entsprechender Anteil HDPE die oben beschriebenen Eigenschaften positiv hinsichtlich der Kratzfestigkeit beeinflusst. Wenn die Tube aus mehr als einer Schicht aufgebaut ist, wird in der Regel eine dem Verbraucher zugewandte Aussenschicht einen möglichst großen Anteil an HDPE aufweisen. Da HDPE in der Regel steifer als LLDPE ist, wird diese Außenschicht möglichst dünn gestaltet sein, um den gewünschten Rückstelleffekt der Tube nicht zu reduzieren.

Natürlich kann es auch möglich sein, eine sehr dünne extrem kratzfeste Außenschicht an der Tube zu erzeugen, die einen HDPE-Anteil von mehr als 50 bis hin zu 80 Gewichtsprozent enthält.

Gemäß einem weiteren Ausführungsbeispiel der Erfindung ist durch die LLDPE-reiche Schicht ein Innenraum der Tube begrenzt. Somit bildet eine LLDPE-reiche Schicht eine der Außenschicht gegenüberliegende Innenschicht, mit der in die Tube eingefüllte Produkte in Kontakt kommen. Der hohe LLDPE-Anteil in der LLDPE-reichen Schicht kann sehr gute Ergebnisse beim Verschweißen eines der Tubenschulter gegenüberliegenden Endbereichs gewährleisten. Die LLDPE-reiche Schicht kann zusätzlich HDPE enthalten, vorzugsweise in den für die LLDPE-reiche Schicht beschriebenen Anteilen.

Nach einer weiteren Ausgestaltungsform weist die Tube zusätzlich zur LLDPE-reichen Schicht eine durch Extrusionsblasformen erzeugte Schicht mit einem HDPE Anteil von mehr als 50, 60 oder 70 Gewichts-Prozent auf, wobei es sich dabei vorzugsweise um die äusserste durch Extrusionsblasformen erzeugte Schicht handelt. Ist die Schicht aussen angebracht, so erhöht sie die Kratzfestigkeit der Tube. Unabhängig von der Position der genannten zusätzlichen Schicht, kann es von Vorteil sein, wenn die Schicht mit einem genannten HDPE-Anteil dünner ist als die LLDPE-reiche Schicht, um die Flexibilität der Tube, respektive dessen Körpers, nur minimal zu beeinflussen.

Die durchschnittliche Wandstärke der Tube (d.h. die Summe aller durch Extrusionsblasformen erzeugten Schichten) ist 0.3 bis 0.65 Millimeter bei Tuben bis zu etwa 500ml Fassungsvermögen. Bevorzugt weisen derartige Tuben eine Wandstärke zwischen 0.45 und 0.5 Millimeter auf. Es hat sich gezeigt, dass eine Tube mit einer LLDPE-reichen Schicht und der genannten Wandstärke ein hervorragendes Rückstellvermögen besitzt und sich leicht handhaben lässt. Die Wandstärke einer optionalen Barriereschicht ist größer gleich 0.1 Millimeter. In der Regel ist die Wanddicke der Barriereschicht etwa 3% der Gesamtwanddicke der Tube.

Ist nichts anderes erwähnt, soll unter dem "Ende der Tube" vorzugsweise das hintere, d.h. dem Hals der Tube (in Bezug auf den Tubenkörper) gegenüberliegende, Ende der Tube zu verstehen sein. Wird zuerst eine an ihrem Ende offene Tube erzeugt, dann ist vorgesehen, das Ende der Tube - sinnvollerweise nach dem Befüllen der Tube - zu verschliessen, insbesondere zu verschweissen (z.B. durch Warmluft oder Ultraschall oder weitere geeignete Technologien). Vor dem Befüllen kann der Körper der Tube im Wesentlichen zylindrisch (insbesondere mit im Wesentlichen kreisförmigem oder elliptischem oder einem sonstigen Querschnitt) ausgebildet sein. In vorteilhafter Weise kann das Etikettieren ausgeführt werden, wenn die Tube offen und ungefüllt ist und somit der Körper einen im Bereich der vorzunehmenden Etikettierung bevorzugt zweidimensional gekrümmten Bereich aufweist. Die Entnahme der Füllung aus der Tube erfolgt aus einer durch den Hals begrenzten Austrittsöffnung, die dem hinteren Ende gegenüber liegt.

Ist das Ende der Tube in einem Endbereich dazu vorgesehen, verschweisst zu werden, so ist es von Vorteil, wenn die Wandstärke der Tube im Endbereich (d.h. im Bereich der anzubringenden Schweissnaht) weniger als ±15 Prozent, vorzugsweise weniger als ±5 Prozent von der durchschnittlichen Wandstärke in diesem Endbereich abweicht. Bei ±5 Prozent differiert bei einer Tubenwandstärke von 0.5mm die Wandstärke im Endbereich um ±0.025mm. Es hat sich gezeigt, dass dadurch das Verschweissen stark vereinfacht wird und Schweißnähte mit Materialanhäufungen, insbesondere erzeugt durch Herausgequetschten aus den Quetschbalken, vermeiden werden können.

Auch kann durch die geometrische Ausgestaltung der Tube, respektive des Tubenkörpers, die Schweißfähigkeit der Tube unterstützt werden. Hierzu kann die Trennebene der Blasform derart angeordnet sein, dass diese die am weitesten von der Mittelachse entferntesten Punkte des Endbereichs der Tube schneidet. Somit ist die Lage der Trennebene der Blasform bei einem Endbereich mit kreiszylindrischem Querschnitt beliebig. Bei einem Endbereich mit elliptischem Querschnitt wird in der Regel die Trennebene der Blasform durch die Hauptscheitel gelegt werden. Bei einem Endbereich mit sechseckigem Querschnitt wird in der Regel die Trennebene der Blasform durch zwei einander gegenüberliegender Ecken gelegt werden.

Die Tube kann zusätzlich zur LLDPE-reichen Schicht eine durch Extrusionsblasformen erzeugte Schicht aus Regenerat aufweisen. Alternativ oder zusätzlich dazu kann die Barriereschicht (beispielsweise aus EVOH) in der Tubenwandung vorhanden sein, an die eine Schicht aus Haftvermittler verbunden sein kann. Solche Haftvermittlerschichten können beispielsweise beidseitig der Barriereschicht angeordnet sein.

Ist eine Regeneratschicht vorgesehen, so enthält diese vorzugsweise Material, welches während des Herstellungsprozesses von Tuben gleicher Art bzw. entsprechenden Zwischenprodukten abgetrennt wurde.

Dies kann in einem Verfahren zur Herstellung einer Tube, wie sie in diesem Dokument beschrieben ist, erfolgen. Bei einem solchen Verfahren werden Körper, Schulter und Hals der Tube vorzugsweise in einem Stück durch Extrusionsblasformen hergestellt, wobei die Tube eine LLDPE-reiche Schicht aufweist. Zum Einbringen der genannten Regeneratschicht kann das Verfahren zudem folgende Schritte umfassen: Extrusion eines schlauchförmigen Vorformlings; Einführung des Vorformlings in eine Blasform und Aufblasen des Vorformlings durch Beaufschlagung mit Druck; Entformung des entstehenden Zwischenprodukts; Entfernung des Bodens des Zwischenprodukts; Zerkleinern des Bodens zu Regenerat; Rückführung des Regenerats in den Herstellungsprozess; Erzeugung einer Regenerat enthaltenden Schicht als Teil der Tube.

Zusätzlich kann dem Regenerat das Überschussmaterial von Boden und Hals zugeführt werden. Das Regenerat kann gemahlen und optional vor dem Mahlen agglomeriert oder regranuliert werden. Dem Regenerat kann zusätzlich neues, d.h. nicht rezykliertes, LLDPE und/oder HDPE oder ein anderes Polymer zugemischt werden. Entsprechend kann die Regenerat-Schicht (und optional das Granulat) im Wesentlichen ausschliesslich aus Regenerat bestehen oder Regenerat enthalten. Das Zumischen von frischem Polymer erleichtert in der Regel die Verarbeitung und damit den Herstellungsprozess der Tube. Die Regeneratschicht kann in Verbindung mit einer Barriereschicht je nach Anforderung an die Tube näher als die Barriereschicht an einen durch die Tubenwandung begrenzten Innenraum angeordnet sein, oder umgekehrt.

Die Herstellung der Tube erfolgt im Extrusionsblasverfahren, insbesondere in einem Schlauchblasverfahren. Es kann dabei ein kontinuierliches oder ein diskontinuierliches Extrusionsblasverfahren zum Einsatz kommen. Nach einer Ausgestaltungsvariante wird von einem Schlauchkopf ein Kunststoffschlauch extrudiert, in eine Blasform eingebracht, durch Überdruck (zweckmässigerweise über einen Blasdorn) aufgeblasen und durch Kühlung gehärtet und dann aus der Blasform entnommen.

Es besteht die Möglichkeit, für das Verfahren eine Extrusionsblasmaschine einzusetzen, die einen oder mehrere Schlauchköpfe aufweist. Jeder der Schlauchköpfe kann mit einer oder mehreren Extrusionsdüsen ausgerüstet sein.

Nach einer Ausgestaltungsvariante besitzt die verwendete Extrusionsblasmaschine eine oder mehrere Blasformen mit jeweils einer oder mehreren Kavitäten. Sie kann darüber hinaus ein oder mehrere Blasdornen aufweisen.

Die für das Verfahren verwendete Extrusionsblasmaschine besitzt vorteilhaft wenigstens einen Extruder zur Zuführung des Kunststoffmaterials, wenn die Tube lediglich aus einer Schicht gefertigt ist. Wenn die Tube aus Schichten mit unterschiedlichen Kunststoffmaterialien gefertigt ist, besitzt die Maschine so viele Extruder wie unterschiedliche Kunststoffmaterialien bzw. Schichten vorhanden sind. Der Ausgang des Extruders ist mit dem Schlauchkopf verbunden, an dessen (vorzugsweise in der Öffnungsweite regulierbarer) Austrittsdüse der ein oder mehrschichtig extrudierte Schlauch austritt. Entsprechend ist auch die daraus gebildete Tube einschichtig oder mehrschichtig.

Der Schlauch kann optional als Schlauch mit Sichtstreifen, Dekorstreifen oder bezogen auf den Umfang mit mehreren, beispielsweise verschiedenfarbigen, Segmenten extrudiert werden.

Die Blasform kann zur Aufnahme und/oder zur Entnahme des Schlauches ganz oder teilweise geöffnet werden. Beispielsweise kann dies durch Trennung zweier, jeweils eine Hälfte einer vollständigen Kavität umfassender Blasformhälften geschehen (vollständige Öffnung). Alternativ kann die Blasform nur an einem oder an beiden Enden geöffnet werden (teilweises Öffnen).

Nach einer Ausgestaltung wird der Schlauch nach dem Schliessen der Blasform zwischen dem Blasdorn und der Blasform abgetrennt. Das Abtrennen kann z.B. durch Abquetschen oder auch durch Abscheren erfolgen.

Zweckmässigerweise wird ein Blasdorn in die Kavität der Blasform eingefahren, und der Schlauchabschnitt in der Kavität wird aufgeblasen, bis er an den Innenseiten der Kavität anliegt bzw. dessen Form angenommen hat. Danach - meist nach einem Abkühlungsschritt - kann er als Zwischenprodukt entnommen werden. Als weitere Schritte sind die Abtrennung des Überschußmaterials von Boden und Hals sowie die Abtrennung des Bodens und optional die Rückführung des abgetrennten Materials als Regenerat in den Prozess vorgesehen.

Gemäss einer weiteren Ausgestaltung kann vorgesehen sein, dass der extrudierte Kunststoffschlauch während des gesamten Herstellungszyklusses einer Tube kontinuierlich gehalten ist. Eine Möglichkeit, dies zu erreichen, besteht darin, an gegenüberliegenden Seiten der Blasformwerkzeugs Halteeinrichtungen für den Kunststoffschlauch anzubringen. Die Haltevorrichtungen für den Schlauch können einerseits durch den Blasdorn und andererseits durch den Schlauchkopf gebildet sein oder in Form zusätzliche Vorrichtungsteile realisiert sein. An der dem Schlauchkopf abgewandten Seite der Blasformwerkzeuganordnung kann dann eine Trenneinrichtung zur Trennung des Schlauches vorgesehen sein. Die Blasformkavität weist auf der Seite des Blasdorns (bei dieser Variante an der der Extrusionsdüse abgewandten Seite) eine Mündung auf, in welche der Blasdorn in die Blasformkavität einfahrbar ist.

Es kann aber auch eine bekannte Extrusionsblasmaschinen eingesetzt werden, bei der eine Anzahl von Blasformwerkzeugen auf einem rotierenden Rad angeordnet sind.

Das Verfahren kann darüber hinaus als Verfahrensschritte die Ausbildung eines oder mehrerer der Merkmale der beschriebenen Tube umfassen.

Entsprechend kann die erfindungsgemässe Tube Merkmale aufweisen, die durch einen oder mehrere der im Zusammenhang mit dem Verfahren genannten Verfahrensschritte herstellbar sind.

Begriffe in diesem Dokument sollen bevorzugt so verstanden werden, wie sie ein Fachmann auf dem Gebiet verstehen würde. Insbesondere für den Fall, dass Unklarheiten bestehen sollten, können die in diesem Dokument aufgeführten bevorzugten Definitionen (alternativ oder ergänzend) herangezogen werden.

### Kurze Beschreibung der Zeichnungen

Es zeigt in schematischer, nicht massstabsgetreuer Darstellung:

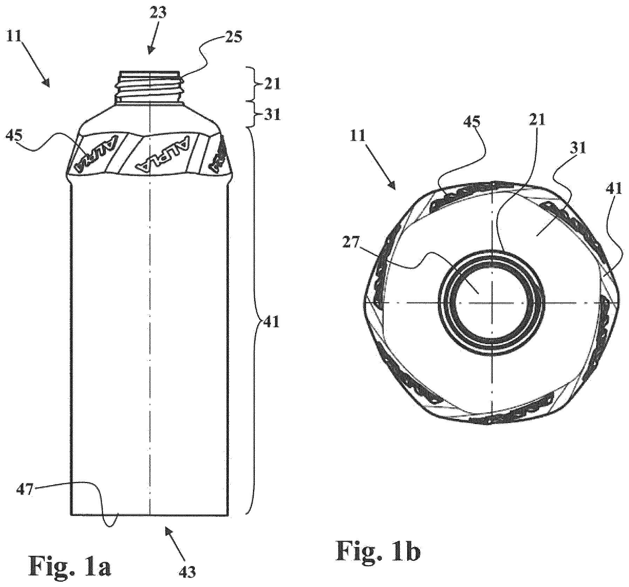

- Fig. 1a: eine Seitenansicht einer unbefüllten Tube;
- Fig.1b: eine Draufsicht (vergrössert) auf die Tube aus Fig.1a.

### Ausführung der Erfindung

Die Erfindung wird nachfolgend anhand der Zeichnungen beispielhaft erläutert.

Die Fig.1a und 1b zeigen eine Tube 11 von der Seite (Fig.1a) und von oben (Fig.1b). Die Draufsicht ist zur besseren Sichtbarmachung der Details im Vergleich zur Seitenansicht vergrössert dargestellt. Die Tube 11 besitzt einen Hals 21, eine Schulter 31 und einen Körper 41, welche einstückig mittels Extrusionsblasformen hergestellt sind, wobei die Tube 11 eine durch das Extrusionsblasformen erzeugte LLDPE-reiche Schicht mit einem LLDPE-Anteil von mehr als 50, 60 oder 70 Gewichts-Prozent aufweist. Zweckmässigerweise ist dem LLDPE mindestens ein anderes Polymer wie beispielsweise HDPE in einem Anteil von 5,1015 bis hin zu 50 Gewichts-Prozent beigemischt, wobei sich die vorgenannten Angaben auf die Anteile am Gesamtgewicht der LLDPE-reichen Schicht beziehen. Der Hals 21 am vorderen Ende 23 der Tube ist mit einer Öffnung 27 zur Abgabe des Tubeninhalts während der Verwendung durch den Konsumenten ausgestattet und weist im vorliegenden Beispiel ein Gewinde 25 zur Befestigung eines (nicht gezeigten) Deckels auf, wobei aber auch die Verwendung einer Vielzahl anderer aus dem Stand der Technik bekannter Verschlussmechanismen denkbar ist. Die Schulter 31 ist der vom Hals 21 ausgehende, sich erweiternde Teil der Tube 11, welcher den Hals 21 mit dem Körper 41 verbindet. In Fig.1a ist die Tube 11 im Zustand vor der Befüllung dargestellt. Der Körper 41 ist an einem dem Hals 21 gegenüberliegenden Endbereich 43 noch offen bzw. besitzt eine Öffnung 47, über die die Tube 11 befüllt werden kann. Der Körper 41 ist in diesem Zustand vorteilhaft im Wesentlichen zylindrisch, vorzugsweise mit einem im Wesentlichen kreisförmigen oder ovalen Querschnitt, was unter Anderem das Etikettieren erleichtert. Um die beschriebene Tubenform zu erzeugen, kann zuerst mittels Extrusionsblasformen ein im Wesentlichen flaschenförmiges Zwischenprodukt erzeugt werden, wobei dessen Boden anschliessend abgetrennt wird, wodurch die Öffnung 47 entsteht. Das Material, aus dem der Boden gefertigt ist, kann dem Prozess als Regenerat wieder zugeführt werden und eine Schicht der Tube bilden. Ein solches Recycling senkt die Kosten und schont die Umwelt. Dem aus dem Überschußmaterial von Boden und Hals sowie dem abgetrennten Boden gewonnenen Regenerat kann vor der Erzeugung der Regenerat-Schicht optional neues, d.h. nicht-recyceltes Polymermaterial wie z.B. HDPE und/oder LLDPE in einem Anteil (bezogen auf das Gewicht der Regenerat-Schicht) von 10 bis vorzugsweise 30 Gewichts-Prozent zugemischt werden, um die Verarbeitung des Regenerats zu erleichtern. Agglomeriertes oder regranuliertes Regenerat kann auch zu 100%, also ohne Beimischung, direkt verarbeitet werden. Nach dem Befüllen der Tube 11 wird die Öffnung 47 verschlossen. Dies geschieht im Allgemeinen dadurch, dass der Körper 41 am Endbereich 43 zusammengedrückt wird, bis sich in Bezug auf die Öffnung 47 gegenüberliegende Innenseiten des Körpers 41 berühren. Anschliessend werden diese sich berührenden Bereiche am Endbereich 43 der Tube 11 zweckmässigerweise miteinander verschweisst, beispielsweise mittels Ultraschall oder Hitze. Das Verschweissen wird stark vereinfacht, wenn die Wandstärke des Tubenkörpers 41 im zu verschweissenden Bereich am Endbereich 43 der Tube im Wesentlichen konstant ist oder zumindest nicht mehr als ±15 oder ±5 Prozent von der durchschnittlichen Wandstärke in diesem Endbereich 43 abweicht. Der Körper 41 weist im gezeigten Beispiel Erhebungen 45 in Form von Buchstaben auf. Die Verwendung einer LLDPE-reichen Schicht, wie sie oben beschrieben wurde, erlaubt die Ausbildung von Erhebungen 45 und/oder Vertiefungen mit im Wesentlichen scharfkantigen Strukturen. Unter im Wesentlichen scharfkantig ist hier zu verstehen, dass die Kanten und Ecken der Erhebungen 45 und/oder Vertiefungen einen Radius besitzen, der 0.05mm bis 0.3mm ist. Tuben mit solchen Verzierungen besitzen einen gesteigerten Wiedererkennungswert, wodurch Verwechslungen vermieden werden können.

### Bezugszeichenliste:

- 11: Tube
- 21: Hals
- 23: vorderes Ende der Tube
- 25: Gewinde
- 27: Öffnung
- 31: Schulter
- 41: Körper
- 43: Endbereich der Tube
- 45: Erhebung
- 47: Öffnung

## Patentansprüche

1. Extrusionsblasgeformte Tube, wobei es sich um eine über ihr hinteres Ende befüllte oder befüllbare Tube handelt, deren Körper, Schulter und Hals in einem Stück durch Extrusionsblasformen hergestellt sind, wobei die Tube eine LLDPE-reiche Schicht aufweist, wobei die Tube mindestens zwei Schichten aufweist, wobei alle Schichten durch Extrusionsblasformen hergestellt sind, wobei durch die LLDPE-reiche Schicht ein Innenraum der Tube begrenzt ist, **dadurch gekennzeichnet, dass** die LLDPE-reiche Schicht einen LLDPE-Anteil von wenigstens 50 Gewichts-Prozent aufweist und die durchschnittliche Wandstärke der Tube im Bereich des Körpers 0.3 bis 0.85 Millimeter beträgt, wobei die LLDPE-reiche Schicht HDPE und/ oder LDPE enthält, die allein oder zusammen einen gewichtsmässigen Anteil zwischen 5 Gew.-proz. und 50 Gew.-Proz. haben.

2. Extrusionsblasgeformte Tube nach Anspruch 1, **dadurch gekennzeichnet, dass** die LLDPE-reiche Schicht einen LLDPE-Anteil von 50 bis 95 Gewichts-Prozent aufweist.

3. Extrusionsblasgeformte Tube nach Anspruch 1, **dadurch gekennzeichnet**, der Anteil von LLDPE in der LLDPE-reichen Schicht 60 bis 90 Gewichts-Prozent beträgt.

4. Extrusionsblasgeformte Tube nach Anspruch 2, **dadurch gekennzeichnet, dass** der Anteil von LLDPE in der LLDPE-reichen Schicht 70 bis 85 Gewichts-Prozent beträgt.

5. Extrusionsblasgeformte Tube nach Anspruch 2 oder 3, **dadurch gekennzeichnet, dass** die LLDPE-reiche Schicht HDPE enthält, wobei der Anteil von HDPE in der LLDPE-reichen Schicht mindestens 10 Gewichts-Prozent beträgt.

6. Extrusionsblasgeformte Tube nach Anspruch 5, **dadurch gekennzeichnet, dass** die durchschnittliche Wandstärke der Tube im Bereich des Körpers 0.45 bis 0.5 Millimeter beträgt.

7. Extrusionsgeblasene Tube nach einem der vorhergehenden Ansprüche,
**dadurch gekennzeichnet, dass** Körper, Schulter und Hals eine Barriereschicht aufweisen, deren Anteil zwischen etwa 3 Gewichtsprozent und etwa 5 Gewichtsprozent beträgt.

8. Extrusionsblasgeformte Tube nach Anspruch 1, **dadurch gekennzeichnet, dass** ein dem Hals gegenüberliegender Endbereich der Tube dazu vorgesehen ist, verschweisst zu werden, und die Wandstärke des Endbereichs vor dem Verschweissen weniger als ±15 Prozent von der durchschnittlichen Wandstärke in dem Endbereich abweicht.

9. Extrusionsblasgeformte Tube nach Anspruch 1, **dadurch gekennzeichnet, dass** der Körper der Tube vor dem Befüllen im Wesentlichen zylindrisch ausgebildet ist.

10. Extrusionsblasgeformte Tube nach einem der Ansprüche 1 bis 9, **dadurch gekennzeichnet, dass** die Tube einschichtig durch Extrusionsblasformen hergestellt ist.

11. Extrusionsblasgeformte Tube nach einem der Ansprüche 1 bis 10, **dadurch gekennzeichnet, dass** eine der wenigstens zwei Schichten zumindest teilweise aus Regenerat besteht.

12. Extrusionsblasgeformte Tube nach einem der Ansprüche 1 bis 11, **dadurch gekennzeichnet, dass** die Außenschicht einen HDPE Anteil von mehr als 50 Gewichts-Prozent aufweist.

13. Extrusionsblasgeformte Tube nach einem der Ansprüche 1 bis 12, **dadurch gekennzeichnet, dass** die Oberfläche des Körpers der Tube wenigstens eine Erhebung und/oder Vertiefung in Form eines Musters, einer Graphik und/oder eines Zeichens aufweist.

14. Extrusionsblasgeformte Tube nach Anspruch 13, **dadurch gekennzeichnet, dass** die wenigstens eine Erhebung und / oder Vertiefung im Wesentlichen scharfkantig ausgebildet sind.

15. Extrusionsblasgeformte Tube nach Anspruch 14, **dadurch gekennzeichnet, dass** sich eine Breite der wenigstens einen im Wesentlichen scharfkantig ausgebildeten Erhebung und / oder Vertiefung im Wesentlichen entlang einer Mittelachse der Tube und eine Tiefe der wenigstens einen im Wesentlichen scharfkantig ausgebildeten Erhebung und / oder Vertiefung im Wesentlichen senkrecht zu der Mittelachse der Tube erstrecken, wobei bei einer Breite von 1mm die Tiefe etwa 1mm ist.

16. Extrusionsblasgeformte Tube nach Anspruch 15, **dadurch gekennzeichnet, dass** sich bei einer Breite von mehr als 1mm sukzessive ein Verhältnis von Tiefe zu Breite von zwei zu eins bei einer Breite von 10 mm einstellt.

17. Extrusionsblasgeformte Tube nach Anspruch 16, **dadurch gekennzeichnet, dass** sich bei einer Breite von weniger als 1mm sukzessive ein Verhältnis von Tiefe zu Breite von eins zu zwei bei einer Breite von 0,4 mm einstellt.

18. Verfahren zur Herstellung einer Tube nach einem der Ansprüche 1 bis 17 mit folgenden Verfahrensschritten:
- Extrusion eines schlauchförmigen Vorformlings,
- Einführung des Vorformlings in eine Blasform und Aufblasen des Vorformlings, wodurch ein flaschenartiges Zwischenprodukt entsteht,
- Entformung des Zwischenprodukts,
wobei Körper, Schulter und Hals der Tube in einem Stück durch Extrusionsblasformen hergestellt werden, wobei die Tube eine LLDPE-reiche Schicht aufweist.

19. Verfahren nach Anspruch 18, **dadurch gekennzeichnet, dass** es zusätzlich die folgenden Schritte umfasst:
- Entfernung des Bodens des Zwischenprodukts,
- Zerkleinern des Bodens zu Regenerat,
- Erzeugung einer Regenerat enthaltenden Schicht als Teil der Tube.

## Claims

1. Extrusion-blow-moulded tube, which is a tube that is filled or can be filled via its rear end, whose body, shoulder and neck are produced in one piece by extrusion blow moulding, and the tube has an LLDPE-rich layer and comprises at least two layers wherein all layers are produced by extrusion blow moulding and an inner space of the tube is bounded by the LLDPE-rich layer, **characterized in that** the LLDPE-rich layer has an LLDPE content of at least 50 wt. % and the average wall thickness of the tube in the region of the body is 0.3 to 0.85 mm, wherein the LLDPE-rich layer contains HDPE and/or LDPE, which alone or together have a weight percentage of between 5 weight percent and 50 weight percent.

2. Extrusion-blow-moulded tube according to claim 1, **characterised in that** the LLDPE-rich layer has an LLDPE content of 50 to 95 wt. %.

3. Extrusion-blow-moulded tube according to claim 1, **characterised in that** the content of LLDPE in the LLDPE-rich layer is 60 to 90 wt. %.

4. Extrusion-blow-moulded tube according to claim 2, **characterised in that** the content of LLDPE in the LLDPE-rich layer is 70 to 85 wt. %.

5. Extrusion-blow-moulded tube according to claim 2 or 3, **characterised in that** the LLDPE-rich layer contains HDPE, wherein the content of HDPE in the LLDPE-rich layer is at least 10 wt. %.

6. Extrusion-blow-moulded tube according to claim 5, **characterised in that** the average wall thickness of the tube in the region of the body is 0.45 to 0.5 mm.

7. Extrusion-blow-moulded tube according to one of the preceding claims, **characterised in that** the body, shoulder and neck have a barrier layer whose content is between about 3 wt. % and about 5 wt. %.

8. Extrusion-blow-moulded tube according to claim 1, **characterised in that** an end region of the tube opposite the neck is additionally provided to be welded, and the wall thickness of the end region before the welding differs by less than ± 15% from the average wall thickness in the end region.

9. Extrusion-blow-moulded tube according to claim 1, **characterised in that** the body of the tube is substantially cylindrical before it is filled.

10. Extrusion-blow-moulded tube according to one of claims 1 to 9, **characterised in that** the tube is produced as one layer by extrusion blow moulding.

11. Extrusion-blow-moulded tube according to one of the claims 1 to 10, **characterised in that** one of the at least two layers consists at least in part of regenerated material.

12. Extrusion-blow-moulded tube according to one of the claims 1 to 11, **characterised in that** the outer layer has an HDPE content of more than 50 wt. %.

13. Extrusion-blow-moulded tube according to one of claims 1 to 12, **characterised in that** the surface of the body of the tube comprises at least one raised portion and/or depression in the form of a pattern, a graphics and/or a symbol.

14. Extrusion-blow-moulded tube according to claim 13, **characterised in that** the at least one raised portion and/or the depression is formed substantially sharp-edged.

15. Extrusion-blow-moulded tube according to claim 14, **characterised in that** a width of the at least one substantially sharp-edged formed raised portion and/or depression extends substantially along a central axis of the tube, and a depth of the at least one substantially sharp-edged formed raised portion and/or depression extends substantially perpendicular to the central axis of the tube, wherein with a width of 1 mm the depth is about 1 mm.

16. Extrusion-blow-moulded tube according to claim 15, **characterised in that** with a width of more than 1 mm a ratio of depth to width adjusts successively to 2 to 1 at a width of 10 mm.

17. Extrusion-blow-moulded tube according to claim 16, **characterised in that** with a width of less than 1 mm a ratio of depth to width adjusts successively to 1 to 2 at a width of 0.4 mm.

18. Method for producing a tube according to one of claims 1 to 17, comprising the following method steps:
- extrusion of a tubular-shaped preform,
- introduction of the preform into a blow mould and inflation of the blow mould, whereby a bottle-shaped intermediate product is formed,
- removal of the intermediate product from the mould,
- wherein the body, shoulder and neck of the tube are produced in one piece by extrusion blow moulding, wherein the tube has an LLDPE-rich layer.

19. Method according to claim 18, **characterised in that** it additionally comprises the following steps:
- removal of the bottom portion of the intermediate product,
- comminution of the bottom portion to form regenerated material,
- production of a layer containing regenerated material as part of the tube.

## Revendications

1. Tube moulé par extrusion-soufflage, cependant qu'il s'agit d'un tube rempli ou pouvant être rempli par son extrémité postérieure, dont le corps, l'épaulement et le col sont fabriqués en une pièce par moulage par extrusion-soufflage, le tube présentant une couche riche en PEBDL, le tube présentant au moins deux couches, toutes les couches étant fabriquées par formage par extrusion-soufflage, un espace intérieur du tube étant délimité par la couche riche en PEBDL, **caractérisé en ce que** la couche riche en PEBDL présente un taux de PEBDL d'au moins 50 pour-cent en poids et l'épaisseur moyenne de paroi du tube étant, dans la zone du corps, de 0,3 à 0,85 millimètre, cependant que la couche riche en PEBDL contient du PEHD et/ou du PEBD qui, seul ou ensemble, ont un pourcentage en poids entre 5% en poids et 50% en poids.

2. Tube moulé par extrusion-soufflage selon la revendication 1, **caractérisé en ce que** la couche riche en PEBDL présente un taux de PEBDL de 50 à 95 pour-cent en poids.

3. Tube moulé par extrusion-soufflage selon la revendication 1, **caractérisé en ce que** le taux de PEBDL dans la couche riche en PEBDL est de 60 à 90 pour-cent en poids.

4. Tube moulé par extrusion-soufflage selon la revendication 2, **caractérisé en ce que** le taux de PEBDL dans la couche de PEBDL est de 70 à 85 pour-cent en poids.

5. Tube moulé par extrusion-soufflage selon la revendication 2 ou 3, **caractérisé en ce que** la couche riche en PEBDL contient du PEHD, le taux de PEHD dans la couche riche en PEBDL étant d'au moins 10 pour-cent en poids.

6. Tube moulé par extrusion-soufflage selon la revendication 5, **caractérisé en ce que** l'épaisseur moyenne de paroi du tube dans la zone du corps est de 0,45 à 0,5 millimètre.

7. Tube moulé par extrusion-soufflage selon l'une des revendications précédentes, **caractérisé en ce que** le corps, l'épaulement et le col présentent une couche formant barrière dont le taux est entre environ 3 pour-cent en poids et environ 5 pour-cent en poids.

8. Tube moulé par extrusion-soufflage selon la revendication 1, **caractérisé en ce qu'**une zone d'extrémité du tube en face du col est prévue pour être soudée et l'épaisseur de paroi de la zone d'extrémité avant le soudage diffère de moins de ± 15 pour-cent de l'épaisseur moyenne de paroi dans la zone d'extrémité.

9. Tube moulé par extrusion-soufflage selon la revendication 1, **caractérisé en ce que** le corps du tube est configuré sensiblement cylindrique avant le remplissage.

10. Tube moulé par extrusion-soufflage selon l'une des revendications 1 à 9, **caractérisé en ce que** le tube est produit en une couche par formage par extrusion-soufflage.

11. Tube moulé par extrusion-soufflage selon l'une des revendications 1 à 10, **caractérisé en ce que** l'une des au moins deux couches est constituée au moins partiellement par du caoutchouc régénéré.

12. Tube moulé par extrusion-soufflage selon l'une des revendications 1 à 11, **caractérisé en ce que** la couche extérieure présente un taux de PEHD de plus de 50 pour-cent en poids.

13. Tube moulé par extrusion-soufflage selon l'une des revendications 1 à 12, **caractérisé en ce que** la surface du corps du tube présente au moins un rehaussement et/ou un renfoncement en forme de motif, de graphique et/ou d'un signe.

14. Tube moulé par extrusion-soufflage selon la revendication 13, **caractérisé en ce que** le rehaussement et/ou le renfoncement qui existe au moins est configuré sensiblement coupant.

15. Tube moulé par extrusion-soufflage selon la revendication 14, **caractérisé en ce qu'**une largeur du rehaussement et/ou du renfoncement qui existe au moins configuré sensiblement coupant s'étend sensiblement le long d'un axe médian du tube et qu'une profondeur du rehaussement et/ou du renfoncement qui existe au moins configuré sensiblement coupant s'étend sensiblement perpendiculairement à l'axe médian du tube, cependant que, pour une largeur d'1 mm, la largeur est d'environ 1 mm.

16. Tube moulé par extrusion-soufflage selon la revendication 15, **caractérisé en ce que**, pour une largeur de plus d'1 mm, un rapport de la profondeur et de la largeur de deux à un s'ajuste de manière progressive pour une largeur de 10 mm.

17. Tube moulé par extrusion-soufflage selon la revendication 15, **caractérisé en ce que**, pour une largeur de moins d'1 mm, un rapport de la profondeur et de la largeur de un à deux s'ajuste de manière progressive pour une largeur de 0,4 mm.

18. Procédé pour la fabrication d'un tube selon l'une des revendications 1 à 17 avec les étapes de procédé suivantes :
- extrusion d'une préforme tubulaire,
- introduction de la préforme dans un moule de soufflage et gonflage de la préforme si bien qu'un produit intermédiaire de type flacon se forme,
- déformation du produit intermédiaire, le corps, l'épaulement et le col du tube étant fabriqués en une pièce par formage par extrusion-soufflage, le tube présentant une couche riche en PEBDL.

19. Procédé selon la revendication 18, **caractérisé en ce qu'**il comprend en plus les étapes suivantes :
- enlèvement du fond du produit intermédiaire,
- broyage du fond en caoutchouc régénéré,
- production d'une couche contenant du caoutchouc régénéré comme partie du tube.
